Europäisches Patentamt

European Patent Office

Office européen des brevets

(19)

(11) Veröffentlichungsnummer: **0 303 760 B1**

(12) **EUROPÄISCHE PATENTSCHRIFT**

(45) Veröffentlichungstag der Patentschrift: **03.06.92**

(51) Int. Cl.⁵: **B01J 20/12**, A01K 1/015

(21) Anmeldenummer: **88103351.8**

(22) Anmeldetag: **04.03.88**

(54) Verfahren zur Herstellung eines Adsorptionsmittels aus Blähgestein und Calciumsulfat-Halbhydrat.

(30) Priorität: **24.04.87 DE 3713742**

(43) Veröffentlichungstag der Anmeldung:
**22.02.89 Patentblatt  89/08**

(45) Bekanntmachung des Hinweises auf die
Patenterteilung:
**03.06.92 Patentblatt  92/23**

(84) Benannte Vertragsstaaten:
**AT BE CH DE FR GB IT LI NL SE**

(56) Entgegenhaltungen:
**DE-A- 2 725 687**
**DE-A- 2 931 068**
**US-A- 4 459 368**

(73) Patentinhaber: **GIPSWERK EMBSEN GMBH &
CO. BAUSTOFFPRODUKTION KG
Bahnhofstrasse 8
W-2120 Lüneburg(DE)**

Patentinhaber: **Gebr. Knauf Westdeutsche
Gipswerke
Am Bahnhof 7
W-8715 Iphofen(DE)**

(72) Erfinder: **Hamm, Heiner, Dr. Dipl.-Ing.
Schlesierstrasse 19
W-8700 Würzburg(DE)**
Erfinder: **Hartmann, Peter, Dr. Dipl.-Chem.
Am oberen Bühl 12
W-8717 Mainbernheim(DE)**
Erfinder: **Kampner, Karl-Heinz, Dipl.-Ing.
Schwarzer Kamp 12
W-2121 Embsen(DE)**
Erfinder: **Kurandt, Hans-Friedrich, Dr.
Dipl.-Chem.
Wilhelm-Reinecke-Strasse 66
W-2120 Lüneburg(DE)**

(74) Vertreter: **Böhme, Volker, Dipl.-Ing. et al
Patentanwälte Dipl.-Ing. E. Kessel Dipl.Ing. V.
Böhme Karolinenstrasse 27
W-8500 Nürnberg 1(DE)**

**Beschreibung**

Die Erfindung betrifft ein Verfahren zur Herstellung eines Adsorptionsmittels, insbesondere für tierische Ausscheidungen, aus Blähgestein und Calciumsulfat-Halbhydrat, bei dem körniges geblähtes Blähgestein und Calciumsulfat-Halbhydrat zu einem Granulat gemischt werden, bei dem das Calciumsulfat-Halbhydrat durch Zugabe von Wasser im Überschuß insgesamt in Calciumsulfat-Dihydrat überführt wird, und bei dem freies Wasser durch Trocknen entfernt wird.

Bei einem bekannten (DE-PS 30 21 377) Verfahren dieser Art wird für das Adsorptionsmittel ein Gewichtsverhältnis Calciumsulfat : Perlit von maximal 5 : 1 empfohlen und erfolgt das Mischen in einer rotierenden Granuliertrommel, wodurch im wesentlichen runde Granalien mit einem Perlitkorn und einem Calciumsulfat-Dihydrat-Überzug hergestellt werden, wobei das Granulat einen Gesamtwassergehalt von ca. 18 Gew.% aufweist. Die befriedigende Adsorptionswirkung dieses Adsorptionsmittels wird durch Einsatz von relativ viel Perlit erreicht, der teuer ist. Auch werden ausreichende Härte und Abriebfestigkeit des nach dem bekannten Verfahren hergestellten Adsorptionsmittels unter Zugabe eines Polyalkohols erreicht.

Eine Aufgabe der Erfindung ist es daher, ein Verfahren der eingangs genannten Art zu schaffen, mit dem ein Adsorptionsmittel herstellbar ist, dessen Anteil an Blähgestein verringert ist, dessen Adsorptionswirkung in etwa beibehalten ist und dessen Härte ohne Zusatz erhöht ist. Das erfindungsgemäße Verfahren ist, diese Aufgabe lösend, dadurch gekennzeichnet, daß Calciumsulfat-Halbhydrat und Blähgestein in solchen Mengen gemischt werden, daß im Adsorptionsmittel ein Gewichtsverhältnis Calciumsulfat : Blähgestein > 5 : 1 und bis zu 10 : 1 vorliegt, daß das Mischen erfolgt, indem das Calciumsulfat-Halbhydrat und das Blähgestein in einen Behälter zusammengeschüttet und dort gemeinsam mittels eines Rührwerkzeuges zu einem Granulat-Gemisch verrührt werden, daß das Granulat-Gemisch nach der Zugabe des Wassers und vor dem Trocknen mindestens 4 min. verweilt, und daß das trockene Calciumsulfat-Dihydrat durch Calcinieren bei 120 - 200°C zu einem solchen Teil in Calciumsulfat-Halbhydrat überführt wird, daß das Adsorptionsmittel einen Gesamtwassergehalt von 1 Gew.% bis 16 Gew.% aufweist.

Das erfindungsgemäße Verfahren arbeitet mit einer verminderten Blähgesteinmenge und stellt ein Adsorptionsmittel her, das einerseits Teilchen aufweist, die ein Blähgesteinkern mit Calciumsulfat-Überzug sind, und andererseits Teilchen aufweist, die nur von Calciumsulfat gebildet sind. Die Teilchen des Adsorptionsmittels sind im wesentlichen unrund und weisen eine offenporige Oberfläche auf. Trotz der Verminderung der Blähgesteinmenge wird durch die zusätzliche Adsorptionswirkung des calcinierten Calciumsulfates die Gesamt-Adsorptionswirkung des Adsorptionsmittels gewahrt. Eine Verringerung des Gesamtwassergehaltes um 1 Gew.% steigert die Adsorptionswirkung um ca. 3 %. Obwohl beim Calcinieren von Calciumsulfat-Dihydrat-Stücken die Härte des Produktes normalerweise stark zurückgeht, ist dies bei dem erfindungsgemäßen Verfahren nicht der Fall. Die Härte des hergestellten Adsorptionsmittels ist nicht geringer als die Härte des Granulates vor dem Calcinieren und größer als die des nach dem bekannten Verfahren hergestellten Adsorptionsmittels.

Besonders zweckmäßig und vorteilhaft ist es, wenn Calciumsulfat-Halbhydrat und Blähgestein in solchen Mengen verrührt werden, daß im Adsorptionsmittel ein Gewichtsverhältnis Calciumsulfat : Blähgestein von 6 : 1 bis 8 : 1 vorliegt. Bei diesem Gewichtsverhältnis ist eine günstige Blähgesteineinsparung gegeben und ist das spezifische Gewicht des Adsorptionsmittels noch nicht allzu hoch. Das körnige geblähte Blähgestein ist in dem Adsorptionsmittel nicht nur seiner adsorbierenden Wirkung wegen enthalten, sondern auch, um das spezifische Gewicht des Adsorptionsmittels in bestimmten Grenzen herabzusetzen. In vielen Fällen, z.B. bei der Herstellung von Katzenstreu, ist ein Verhältnis von 5,5 : 1 - 6,5 : 1, z.B. 6 : 1 bevorzugt.

Für die Eigenschaften des nach dem erfindungsgemäßen Verfahren hergestellten Adsorptionsmittels ist ein schonendes Calcinieren wichtig. Besonders zweckmäßig und vorteilhaft ist es daher, wenn das Calcinieren bei 135 - 145°C erfolgt. Bei diesen calcinierenden Temperaturen werden verbesserte Adsorptionswirkung und Härte erreicht.

Eine Calciniertemperatur bis zu 150°C reicht in vielen Fällen aus. Eine Erhöhung der Calciniertemperatur, auf z.B. 190°C, verkürzt die für das Calcinieren notwendige Zeitspanne. Als besonders zweckmäßig und vorteilhaft haben sich Calciniertemperaturen von 120 - 190°C, vorzugsweise von 160 - 180°C, herausgestellt.

Besonders zweckmäßig und vorteilhaft ist es auch, wenn zu einem solchen Teil in Calciumsulfat-Halbhydrat überführt wird, daß das Adsorptionsmittel einen Gesamtwassergehalt von 6 Gew.% bis 12 Gew.% aufweist. Aufgrund einer solchen Calcinierung entfaltet das Adsorptionsmittel-Calciumsulfat, das außer Halbhydrat auch Dihydrat und Anhydrit III umfaßt, vorzügliche Adsorptionswirkung.

Das Verweilen des unter Wasserzugabe hergestellten Granulat-Gemisches nach der Erzeugung dieses Granulat-Gemisches und vor dem Trocknen erweist sich als wichtig für die Härte und Abriebfestigkeit.

Besonders zweckmäßig und vorteilhaft ist es, wenn das Granulat-Gemisch vor dem Trocknen bis zu 8 min. verweilt. In diesem Zeitraum kann die Reaktion des Wassers mit dem Calciumsulfat-Halbhydrat ungestört vollständig ablaufen. In der Praxis genügt in der Regel eine Verweilzeit von ca. 4 min., um ein ausreichend hartes Granulat zu erhalten, wobei auch bis zu 5 min. noch brauchbar sind.

Das erfindungsgemäß hergestellte Adsorptionsmittel kann für Flüssigkeiten anorganischen oder organischen Ursprunges verwendet werden, z.B. als Bindemittel für Säuren, Laugen oder Öl, die auch mit Wasser vermischt sein können. Jedoch wird das Adsorptionsmittel bevorzugt als Auffangmittel für tierische Ausscheidungen, z.B. als Katzenstreu, verwendet.

Das teuere Blähgesteinanteil im Fertigprodukt läßt sich um mehr als 50 % vermindern, was eine deutliche Kostenersparnis darstellt. Das Adsorptionsmittel-Granulat ist offenporig und nicht rund, was bei Verwendung als Katzenstreu wichtig ist, weil das Granulat nicht rollt. Besonders zweckmäßig und vorteilhaft ist es, wenn das Adsorptionsmittel mit einem Schüttgewicht von 0,35 - 0,6 kg/l vorzugsweise von 0,4 - 0,5 kg/l hergestellt wird, da leichtere Produkte von den Katzen aus der Kleintiertoilette herausgescharrt werden. Das erfindungsgemäß hergestellte Adsorptionsmittel ist härter und mehlt nicht ab, so daß die Katze nach Benutzung der Kleintiertoilette keine Spuren hinterläßt.

Das bei dem erfindungsgemäßen Verfahren verwendete Blähgestein ist z.B. Vermiculit, der im rohen Zustand, wie die hier in Betracht zu ziehenden Blähgesteine, eine Wasser enthaltende Mineralie ist. Besonders zweckmäßig und vorteilhaft ist es jedoch, wenn als Blähgestein Perlit verwendet wird. Perlit ist nicht etwa gelb oder braun, sondern weiß und bringt die von dem erfindungsgemäß hergestellten Mittel gewünschten Eigenschaften in ausgeprägterer Weise.

Das erfindungsgemäß hergestellte Adsorptionsmittel läßt sich nicht nur für Adsorptionszwecke, sondern auch unter anderen Umständen verwenden, z.B. in der Bauindustrie als Zuschlagstoff in gipsverträglichen Mörtelmischungen. Besonders zweckmäßig und vorteilhaft ist es, wenn das erfindungsgemäß hergestellte Adsorptionsmittel als Baustoffgranulat für Schüttungen verwendet wird. Das Mittel weist nämlich hinsichtlich Schüttgewicht, Abrieb, Verdichtbarkeit und Festigkeit positive Eigenschaften auf, die es für Schüttungen geeignet machen.

Der Gesamtwassergehalt läßt sich durch Calcinieren bis auf 1 Gew.% herabdrücken, wobei eine Verringerung des Gesamtwassergehaltes die Adsorptionswirkung steigert. Besonders zweckmäßig und vorteilhaft ist es, wenn durch das Calcinieren ein Geamtwassergehalt von ca. 2 Gew.%, nicht über 8 Gew.% oder einen Wert zwischen diesen beiden Grenzwerten eingestellt wird. Festigkeit, Schüttgewicht und Adsorptionsfähigkeit stehen dann in einem bevorzugten Verhältnis zueinander.

Die Korngröße des verwendeten körnigen geblähten Blähgesteins beträgt 0 - 6 mm und mindestens 85 % der Granalien des fertigen Adsorptionsmittels haben eine Körnung > 1,25 mm. Es entsteht ein Granulat von rund 95 % > 0,8 mm bis zu 6 mm. Das Adsorptionsmittel umfaßt in der Regel größere Teilchen, die Calciumsulfatummantelnde Blähgesteinteilchen sind, und kleinere Teilchen, die nur aus Calciumsulfat bestehen.

Bei dem verwendeten Blähgestein sollte mindestens 90 % eine Körnung von 1 6 mm aufweisen, da kleinere Staubanteile unerwünscht sind. Bei dem Calciumsulfat-Halbhydrat sollten mindestens 80 %, vorzugsweise mindestens 90 %, < 63 $\mu$m sein.

Es werden z.B. 143 kg Stuckgips mit 20 kg geblähtem Perlit, Körnung 50 % 0 - 3 mm und 50 % 3 - 6 mm, unter Zugabe von 80 l Wasser in einem Eirichmischer 60 sek. lang gemischt. Es wird Wasser im Überschuß zugegeben. Das Wasser wird in der Regel im vollen Strahl oder Schwall zugegeben bzw. geschüttet. Die Umfangsgeschwindigkeit des Rührwerkzeuges beträgt 6,5 m/s. Es entsteht ein offenporiges Granulat. Das feuchte Granulat verweilt auf einem langsam laufenden Förderband vor dem Trocknen und Calcinieren.

Die Trocken- und Calciniereinrichtung ist so konzipiert, daß das Granulat möglichst wenig reibende Bewegung macht. Das ist wichtig, um den Abrieb des zunächst noch feuchten Materials zu verhindern und damit die offenporige Oberfläche erhalten bleibt. Deshalb ist ein Trommeltrockner nicht geeignet, wogegen eine Wirbelschicht-Trocken- und Calciniereinrichtung oder eine nach Art eines Getreidetrockners arbeitenden Trocken- und Calciniereinrichtung geeignet ist. Als besonders gut für die Trocken- und Calciniereinrichtung brauchbar haben sich Bandtrockner herausgestellt, die ein siebartig durchbrochenes Band aufweisen und bei denen das mit dem Gut belegte obere Trumm von unten her mit einem Heißgas durchblasen wird.

Die Trocken- und Calciniereinrichtung ist zweistufig. In der Trockenstufe wird bei 80 - 100°C, z.B. 90°C, die freie Feuchte enfernt. In der Calcinierstufe wird das Granulat mit ca. 130°C heißer Luft behandelt, um das im Dihydrat enthaltene Kristallwasser von ca. 20 % auf ca. 8 % zu reduzieren. Dieser Schritt verbessert die Adsorptionswirkung des fertigen Adsorptionsmittels um bis zu 30 %, ohne daß die Härte und damit der Abrieb des Endproduktes merklich verschlechtert werden.

An sich läßt sich jede geeignete, mit Mischwerkzeug arbeitende Mischeinrichtung verwenden. Besonders zweckmäßig und vorteilhaft ist es, wenn das Mischen durchgeführt wird in einem sich drehenden Behälter und bei exzentrisch angeordnetem, sich gegensinnig drehenden Rückwerkzeug und wenn das Rührwerkzeug im wesentlichen gebildet ist von mehreren drahtartigen Stangen, die im wesentlichen in Richtung der Drehachse verlaufen und um die Drehachse herum, mit Abstand von dieser verteilt angeordnet sind. Bei dieser Ausgestaltung wird binnen verkürzter Zeit verbesserte Mischung erreicht, ohne daß allzuviele Materialteilchen zerschlagen werden.

Anhand der folgenden Tabelle sollen der Einfluß der Calcination und des Perlitanteiles auf die Adsorption dargestellt werden:

| Perlitgehalt im Fertigprodukt % | Ges. $H_2O$ im Fertigprodukt % | Adsorption % $H_2O$ | Schüttdichte g/l | Bruchfestigkeit nach Heberlein N | Abrieb % |
|---|---|---|---|---|---|
| 15 | 17,8 | 80 | 410 | 20 - 35 | 16 |
| 15 | 10,5 | 100 | 380 | 20 - 32 | 17 |
| 15 | 8 | 110 | 370 | 20 - 32 | 18 |
| 12 | 17,9 | 75 | 440 | 25 - 48 | 7,5 |
| 12 | 10,1 | 95 | 430 | 25 - 46 | 8,5 |
| 12 | 8,6 | 105 | 410 | 25 - 45 | 10,5 |
| Zum Vergleich Granulat nach DE-PS 30 21 377: | | | | | |
| 32 | 13 | 109 | 250 | 5 - 10 | 54 |

Zur Bestimmung der Adsorption (Wasseraufnahmefähigkeit) wurde 110 g zu prüfende Substanz in einen Zylinder gefüllt. Dieser Zylinder ist am Boden mit einem Sieb verschlossen. Von oben wird die zu prüfende Substanz mit 250 ml Wasser übergossen. Gemessen wird die auslaufende Wassermenge in ml. Die Angabe Adsorption z.B. 100 % besagt, daß 1 kg des Granulates 1 kg Wasser adsorbieren können.

Bruchfestigkeitsprüfung mit dem Tablettenprüfgerät Typ Heberlein 10 Granulate von dem zu prüfenden Material, Durchmesser 1,5 - 3,5 mm, werden auf Bruchfestigkeit geprüft. Aus den 10 gefundenen Werten wird der Mittelwert gebildet und als Bruchfestigkeit in kp oder N angegeben.

Abriebtest

1. 100 g Granulat werden auf der Siebmaschine (Typ Siebtechnik Mühlheim-Ruhr) 20 cm Rundsiebe, 5 Min. abgesiebt.
3,5 mm und 250 $\mu$ Sieb und Pfanne Material > 3,5 mm und < 250 $\mu$ wird verworfen.
2. Von dem gesiebten Material 250 $\mu$ - 3,5 mm werden 50 g plus 300 g Stahlkugeln Ø 6 mm in die Siebpfanne gefüllt und 20 min. in der Siebmaschine gerüttelt.
3. Anschließend wird der Inhalt der Pfanne auf ein 3,5 mm Sieb geschüttet, wobei die Stahlkugeln entfernt werden. Das abgesiebte Material wird nun erneut auf ein 250 $\mu$ Sieb geschüttet und 5 min. lang abgesiebt. Der Durchgang durch das 250 $\mu$ Sieb wird als Abrieb definiert.

$$\text{Abrieb} = \frac{\text{Durchgang (g)} \times 100}{50 \text{ g}} = x \text{ \%}$$

**Patentansprüche**

**1.** Verfahren zur Herstellung eines Adsorptionsmittels, insbesondere für tierische Ausscheidungen, aus Blähgestein und Calciumsulfat-Halbhydrat,
bei dem körniges geblähtes Blähgestein und Calciumsulfat-Halbhydrat zu einem Granulat gemischt werden,
bei dem das Calciumsulfat-Halbhydrat durch Zugabe von Wasser im Überschuß insgesamt in Calciumsulfat-Dihydrat überführt wird,
und bei dem freies Wasser durch Trocknen entfernt wird, **dadurch gekennzeichnet**,
daß Calciumsulfat-Halbhydrat und Blähgestein in solchen Mengen gemischt werden, daß im Adsorp-

EP 0 303 760 B1

tionsmittel ein Gewichtsverhältnis Calciumsulfat : Blähgestein > 5 : 1 und bis zu 10 : 1 vorliegt, daß das Mischen erfolgt, indem das Calciumsulfat-Halbhydrat und das Blähgestein in einen Behälter zusammengeschüttet und dort gemeinsam mittels eines Rührwerkzeuges zu einem Granulat-Gemisch verrührt werden, daß das Granulat-Gemisch nach der Zugabe des Wassers und vor dem Trocknen mindestens 4 min. verweilt, und daß das trockene Calciumsulfat-Dihydrat durch Calcinieren bei 120 - 200°C zu einem solchen Teil in Calciumsulfat-Halbhydrat überführt wird, daß das Adsorptionsmittel einen Gesamtwassergehalt von 1 Gew.% bis 16 Gew.% aufweist.

2.  Verfahren nach Anspruch 1, **dadurch gekennzeichnet**, daß Calciumsulfat-Halbhydrat und Blähgestein in solchen Mengen verrührt werden, daß im Adsorptionsmittel ein Gewichtsverhältnis Calciumsulfat : Blähgestein von 6 : 1 bis 8 : 1 vorliegt.

3.  Verfahren nach Anspruch 1 oder 2, **dadurch gekennzeichnet**, daß das Calcinieren bei 135 - 145°C erfolgt.

4.  Verfahren nach Anspruch 1, 2 oder 3, **dadurch gekennzeichnet**, daß zu einem solchen Teil in Calciumsulfat-Halbhydrat überführt wird, daß das Adsorptionsmittel einen Gesamtwassergehalt von 6 Gew.% bis 12 Gew.% aufweist.

5.  Verfahren nach einem der vorhergehenden Ansprüche, **dadurch gekennzeichnet**, daß das Granulat-Gemisch vor dem Trocknen bis zu 8 min. verweilt.

6.  Verfahren nach einem der vorhergehenden Ansprüche, **dadurch gekennzeichnet**, daß das Adsorptionsmittel mit einem Scnüttgewicht von 0,35 - 0,6 kg/l, vorzugsweise von 0,4 - 0,5 kg/l hergestellt wird.

7.  Verfahren nach einem der vorhergehenden Ansprüche, **dadurch gekennzeichnet**, daß als Blähgestein Perlit verwendet wird.

8.  Verfahren nach einem der Ansprüche 1 bis 3 oder 5 bis 7, **dadurch gekennzeichnet**, daß durch Calcinieren ein Gesamtwassergehalt von ca. 2 Gew.%, nicht über 8 Gew.% oder ein Wert zwischen diesen beiden Grenzwerten eingestellt wird.

9.  Verfahren nach einem der Ansprüche 1, 2 oder 4 bis 8, **dadurch gekennzeichnet**, daß eine Calciniertemperatur von 120 - 190°C, vorzugsweise von 160 -180°C angewendet wird.

10. Verfahren nach einem der vorhergehenden Ansprüche, **dadurch gekennzeichnet**, daß das Mischen durchge30 führt wird in einem sich drehenden Behälter und bei exzentrisch angeordnetem, sich gegensinnig drehenden Rührwerkzeug und daß das Rührwerkzeug im wesentlichen gebildet ist von mehreren drahtartigen Stangen, die im wesentlichen in Richtung der Drehachse verlaufen und um die Drehachse herum, mit Abstand von dieser verteilt angeordnet sind.

11. Anwendung des gemäß dem Verfahren nach einem der vorhergehenden Ansprüche hergestellten Adsorptionsmittels als Baustoffgranulat für Schüttungen.

**Claims**

1.  A method of producing an adsorption agent, in particular for animal excretions, from expanded rock and calcium sulphate hemihydrate, in which granular expanded rock and calcium sulphate hemihydrate are mixed to form a granulated material, in which, on the whole, the calcium sulphate hemihydrate is converted to calcium sulphate dihydrate by adding excess water, and in which free water is removed by drying, characterised in that calcium sulphate hemihydrate and expanded rock are mixed in such quantities that a weight ratio of calcium sulphate : expanded rock of > 5 : 1 and up to 10 : 1 is present in the adsorption agent, in that the mixing is effected by pouring the calcium sulphate hemihydrate and the expanded rock into a container together and there stirring them together by means of a stirring tool to form a mixture of

5

granulated material,
in that, after the addition of the water and before the drying, the mixture of granulated material is left to stand for at least 4 mins., and in that such a proportion of the dry calcium sulphate dihydrate is converted into calcium sulphate hemihydrate by calcination at 120 - 200°C that the adsorption agent has a total water content of 1 % by weight to 16 % by weight.

2. A method according to Claim 1, characterised in that calcium sulphate hemihydrate and expanded rock are stirred in such quantities that a weight ratio of calcium sulphate : expanded rock of 6 : 1 to 8 : 1 is present in the adsorption agent.

3. A method according to Claim 1 or 2, characterised in that the calcination takes place at 135 - 145°C.

4. A method according to Claim 1, 2 or 3, characterised in that such a proportion is converted to calcium sulphate hemihydrate that the adsorption agent has a total water content of 6 % by weight to 12 % by weight.

5. A method according to any one of the preceding claims, characterised in that the mixture of granulated material is left to stand for up to 8 mins. before drying.

6. A method according to any one of the preceding claims, characterised in that the adsorption agent is produced with a bulk weight of 0.35 - 0.6 kg/l, preferably of 0.4 - 0.5 kg/l.

7. A method according to any one of the preceding claims, characterised in that perlite is used as the expanded rock.

8. A method according to any one of Claims 1 to 3 or 5 to 7, characterised in that, through calcination, the total water content is adjusted to approx. 2 % by weight, not above 8 % by weight, or to a value between these two limit values.

9. A method according to any one of Claims 1, 2 or 4 to 8, characterised in that a calcination temperature of 120 - 190°C, preferably of 160 - 180°C, is used.

10. A method according to any one of the preceding claims, characterised in that the mixing is carried out in a rotating container and with a stirring tool which is arranged eccentrically and rotates in the opposite direction and in that the stirring tool is principally formed from several wire-like rods which extend substantially in the direction of the axis of rotation and are distributed around the axis of rotation and at a distance therefrom.

11. An application of the adsorption agent, produced in accordance with the method according to any one of the preceding claims, as a granulated building material as a filler.

**Revendications**

1. Procédé de fabrication d'un adsorbant, destiné notamment aux excrétions animales, en roche expansée et semi-hydrate de sulfate de calcium,
dans lequel la roche expansée en grains et le semi-hydrate de sulfate de calcium sont mélangés en un granulat,
dans lequel le semi-hydrate de sulfate de calcium est converti entièrement en dihydrate de sulfate de calcium par addition d'eau en excès,
et dans lequel l'eau libre est éliminée par séchage,
caractérisé en ce que
le semi-hydrate de sulfate de calcium et la roche expansée sont mélangés en des quantités telles qu'on obtient dans l'adsorbant un rapport pondéral du sulfate de calcium à la roche expansée compris entre 5 : 1 et 10 : 1,
en ce que le mélange est opéré par introduction simultanée du semi-hydrate de sulfate de calcium et de la roche expansée dans un récipient et par leur brassage au moyen d'un agitateur mécanique enun mélange de granulat,
en ce qu'on laisse reposer le mélange de granulat pendant un minimum de 4 min après l'addition de l'eau et avant le séchage et en ce que le dihydrate de sulfate de calcium sec est converti par calcination à 120-200°C en semi-hydrate de sulfate de calcium en une proportion telle que l'adsorbant présente une teneur totale en eau comprise entre 1 % enpoids et 16 % en poids.

2. Procédé selon la revendication 1, caractérisé en ce que le semi-hydrate de sulfate de calcium et la roche expansée sont mélangés en des quantités telles qu'on obtient dans l'adsorbant un rapport pondéral du sulfate de calcium à la roche expansée compris entre 6 : 1 et 8 : 1.

3. Procédé selon la revendication 1 ou 2, caractérisé en ce que la calcination est opérée à 135-145°C.

4. Procédé selon la revendication 1, 2 ou 3, caractérisé en ce que la conversion en semi-hydrate de sulfate de calcium est opérée en une proportion telle que l'adsorbant présente une teneur totale en eau comprise entre 6 % en poids et 12 % en poids.

5. Procédé selon l'une des revendications précédentes, caractérisé en ce qu'on laisse reposer le mélange de granulat jusqu'à 8 min avant le séchage.

6. Procédé selon l'une des revendications précédentes, caractérisé en ce que l'adsorbant produit présente un poids volumique compris entre 0,35 et 0,6 kg/l, de préférence entre 0,4 et 0,5 kg/l.

7. Procédé selon l'une des revendications précédentes, caractérisé en ce qu'on utilise de la perlite comme roche expansée.

8. Procédé selon l'une des revendications 1 à 3 ou 5 à 7, caractérisé en ce qu'on ajuste la teneur totale en eau grâce à la calcination à un chiffre d'environ 2 % en poids, ne dépassant pas 8 % en poids ou à un chiffre compris entre ces deux extrêmes.

9. Procédé selon l'une des revendications 1, 2 ou 4 à 8, caractérisé en ce qu'on utilise une température de calcination comprise entre 120 et 190°C, de préférence entre 160 et 180°C.

10. Procédé selon l'une des revendications précédentes, caractérisé en ce que le mélange est opéré dans un récipient en rotation et à l'aide d'un agitateur mécanique excentrique tournant dans le sens contraire et que l'agitateur mécanique est formé essentiellement de plusieurs tiges de type en fil de fer orientées sensiblement dans la direction de l'axe de rotation et réparties autour de l'axe de rotation à distance de ce dernier.

11. Emploi de l'adsorbant fabriqué conformément au procédé selon une des revendications précédentes comme granulat de matériaux de construction pour remblais.